# EUROPEAN PATENT APPLICATION

(11) **EP 4 692 721 A1**
(43) Date of publication of application: **11.02.2026**
(21) Application number: 24779762.4
(22) Date of filing: 19.03.2024
(51) Int. Cl.: G01C 15/00, G01C 15/06

(54) **METHOD FOR DETECTING TARGET IN SURVEYING SYSTEM**

(30) Priority: 30.03.2023 JP 2023054607
(71) Applicant: Topcon Corporation, Tokyo 174-8580 (JP)
(72) Inventor: YOSHINO Kenichiro, Tokyo 174-8580 (JP); USAMI Yoshiyuki, Tokyo 174-8580 (JP)
(74) Representative: Schmitt-Nilson Schraud Waibel Wohlfrom Patentanwälte Partnerschaft mbB
(86) International application number: PCT/JP2024/010800
(87) International publication number: WO 2024/203637

(57) **Abstract**

Provided is a method of identifying and detecting one selected target in a survey system in which a plurality of targets are present for one surveying instrument. Light emission cycles T1, T2, and T3 of pieces of identification light of respective optical transmitters of a plurality of targets are different from each other, a light reception cycle TA of an optical receiver of the surveying instrument is set to be equal to a light emission cycle of identification light of a selected target, and each time the identification light of the selected target is received, the identification light is accumulated and amplified, and an amplified signal is identified to detect the selected target.

## Description

### Technical Field

The present disclosure relates to a method for detecting and measuring a specific target among multiple targets in a survey system.

### Background Art

Conventionally, a single surveying instrument is used together with multiple ground leveling work vehicles to level the ground at a work site. Each work vehicle is equipped with identification information and a target. The surveying instrument acquires the identification information and automatically collimates and tracks a specific work vehicle for surveying. For example, Patent Literature 1 discloses reflection bands with different identification patterns as identification information. These reflection bands are formed with black-and-white stripe patterns using reflective materials. A camera in the surveying instrument captures an image, and the identification means detects unique identification information of the target by performing differential processing on the image. Patent Literature 2 discloses that each target includes a barcode for identification, which is read by a laser scanning detection operation.

Additionally, as a method for detecting and measuring one target among multiple targets, Patent Literature 3 discloses a technique in which a target emits light pulses toward a surveying instrument. The surveying instrument, equipped with an imaging device, captures a first image and a second image of the target. The instrument and the target synchronize the emission of light pulses with the capture of the first image, and emit the light pulses asynchronously with the capture of the second image. By obtaining a difference image between the first and second images, the system determines the direction from the surveying instrument to the target using the position of the light pulse in the difference image as identification information.

### Citation List

### Patent Literature

| | |
|---|---|
| Patent Literature 1: | Japanese Published JP 2016/138802A1 |
| Patent Literature 2: | Japanese Published JP 2020/008406A1 |
| Patent Literature 3: | U.S. Patent No. 11092434 |

### Summary

### Technical Problem

When detecting a specific target using methods such as barcode recognition, the surveying instrument must search the entire area because the target's location is unknown. This process may result in detecting other targets and increases the time required to find the specific target, which is inefficient.

Conventionally, a difference image between the first and second images is obtained, and the direction from the surveying instrument to the target is determined using the position of the light pulse emitted from the target in the difference image as identification information. This method requires synchronization between the image capture and the light pulse emission. To achieve this synchronization, both the surveying instrument and the target must be equipped with high-performance synchronized clocks to emit accurate clock signals. Inaccurate clock signals can cause synchronization failures and errors in determining the direction from the surveying instrument to the target.

An object of the present disclosure is to provide a target detection method that overcomes the above-described problems.

### Solution to Problem

To achieve the above object, the present disclosure provides a target detection method in a survey system that detects and measures one target from a plurality of targets, the survey system including a surveying instrument that measures a target selected based on a selection signal for selecting the one target, the plurality of targets emitting identification light in different cycles, the surveying instrument including a light receiving unit that receives the identification light, an input unit to which the selection signal is input, a storage unit, and a control unit, the target detection method including setting, by the control unit, a cycle in which the light receiving unit receives light based on the selection signal, storing the identification light in the storage unit as light reception data every time the identification light is received, accumulating or averaging the light reception data stored in the storage unit through arithmetic processing, and detecting a target to be measured based on an arithmetic result.

As described above, the target to be measured can be detected without synchronizing clocks on the surveying instrument side and the target side.

A selection signal for selecting one target from among a plurality of targets is preferably input through wireless communication.

When the light emission cycles of the plurality of targets are set to be asynchronized at least up to five cycles each, arithmetic processing is preferably performed reliably in a short time.

Preferably, each of the plurality of targets includes a prism, and the surveying instrument emits tracking light for tracking the prism to a target to be measured detected by the control unit, and aligns a measurement optical axis with respect to the prism of the target to be measured based on reflected light of the tracking light.

### Advantageous Effects

The present disclosure enables detection of a target to be measured without synchronizing the clocks of the surveying instrument and the target. Furthermore, even when two targets are close to each other, the system can reliably detect the correct target.

### Brief Description of Drawings

FIG. 1 is a perspective view schematically illustrating an embodiment of a surveying instrument and multiple targets according to the present disclosure.
FIG. 2 is a block diagram of the surveying instrument and a target unit.
FIG. 3A is a side view of the target unit, and FIG. 3B is a plan view of the target unit.
FIG. 4 is a timing chart illustrating the light reception cycle of the optical receiver and the light emission cycle of each optical transmitter.
FIG. 5 is a flowchart illustrating the operation of detecting and measuring the target.

### Description of Embodiments

Hereinafter, a preferred embodiment of the present disclosure will be described with reference to the accompanying drawings.

The present embodiment does not limit the present disclosure but serves an example, and not all features and combinations described herein are necessarily essential to the present disclosure. In the following description, the same constituents are denoted by the same reference signs, and redundant descriptions are omitted as appropriate.

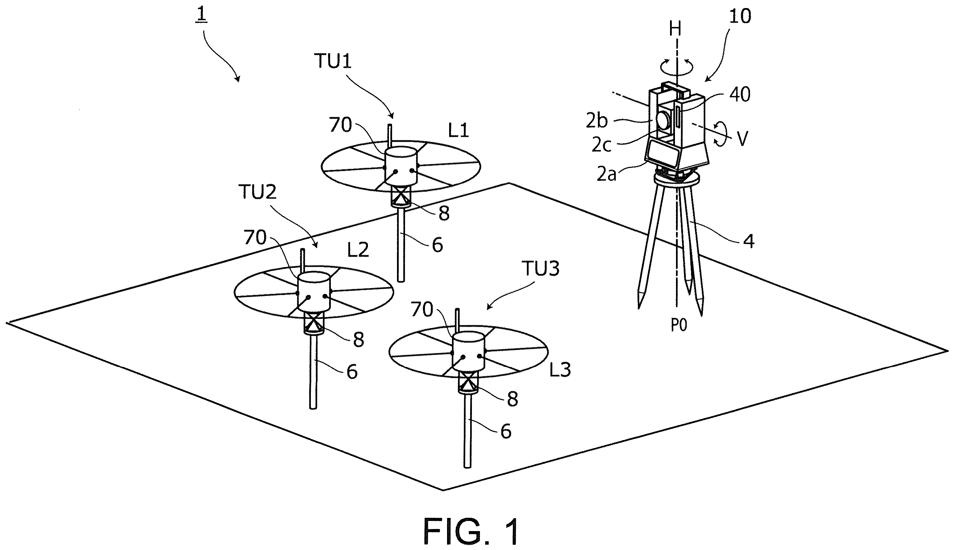

FIG. 1 illustrates the outline configuration of a survey system 1 according to a preferred embodiment of the present disclosure. The survey system 1 includes a surveying instrument 10 and multiple target units TU. In this embodiment, the survey system 1 includes three target units TU1 to TU3. Except for the light emission cycle T (described later), the target units TU1 to TU3 have the same configuration and are collectively referred to as a target unit TU unless otherwise specified.

The surveying instrument 10 is a total station with distance/angle measuring and a tracking functions. The instrument is installed at a reference point using a tripod 4. The surveying instrument 10 includes a base portion 2a on the leveling device, a bracket portion 2b that rotates horizontally about a horizontal rotation axis H relative to the base portion 2a, and a telescope 2c that rotates vertically about a vertical rotation axis V at the center of the bracket portion 2b.

The target unit TU has a target prism 8, which serves as the surveying target for the instrument, at the upper end of a pole 6. The target unit TU is used with the lower end of the pole 6 placed approximately vertically at a measurement point. The prism 8 retroreflects light incident from all directions.

The target unit TU includes an optical transmitter 70 that transmits identification light L in nearly all directions horizontally. The target units TU emit light at different cycles. Specifically, the identification lights L1 to L3 from the optical transmitters 70 attached to the target units TU1 to TU3 are emitted at different cycles T1 to T3, respectively.

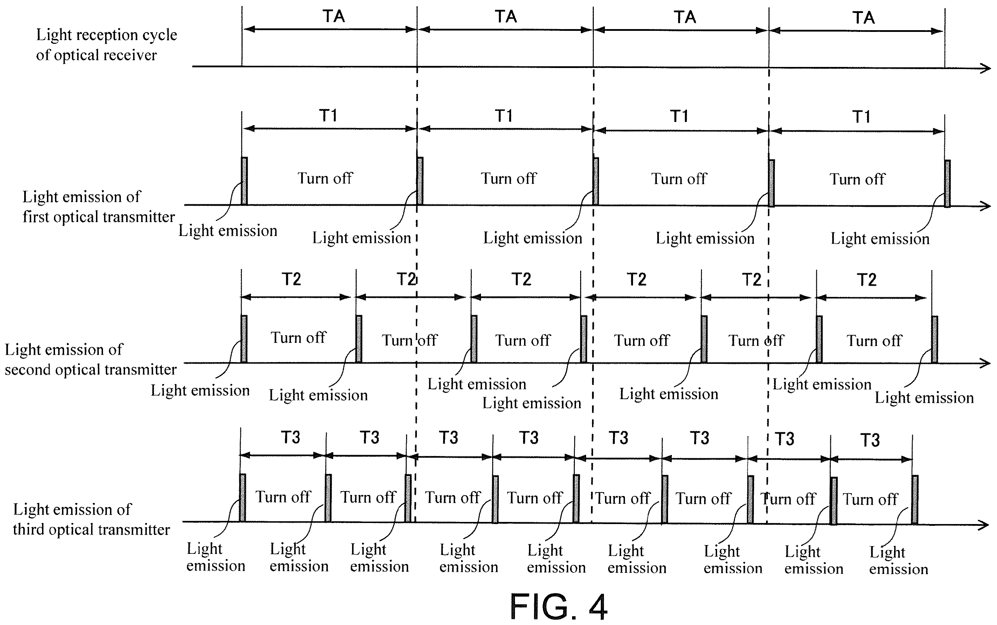

The light emission cycle T of the optical transmitter 70, which varies depending on the target unit TU, serves as identification information specific to each TU. As shown in FIG. 4, the surveying instrument 10 includes an optical receiver 40, which can receive light from the optical transmitter 70. By analyzing the light reception signal from the optical receiver 40, the instrument can capture and identify the specific target unit TU from which the light was received.

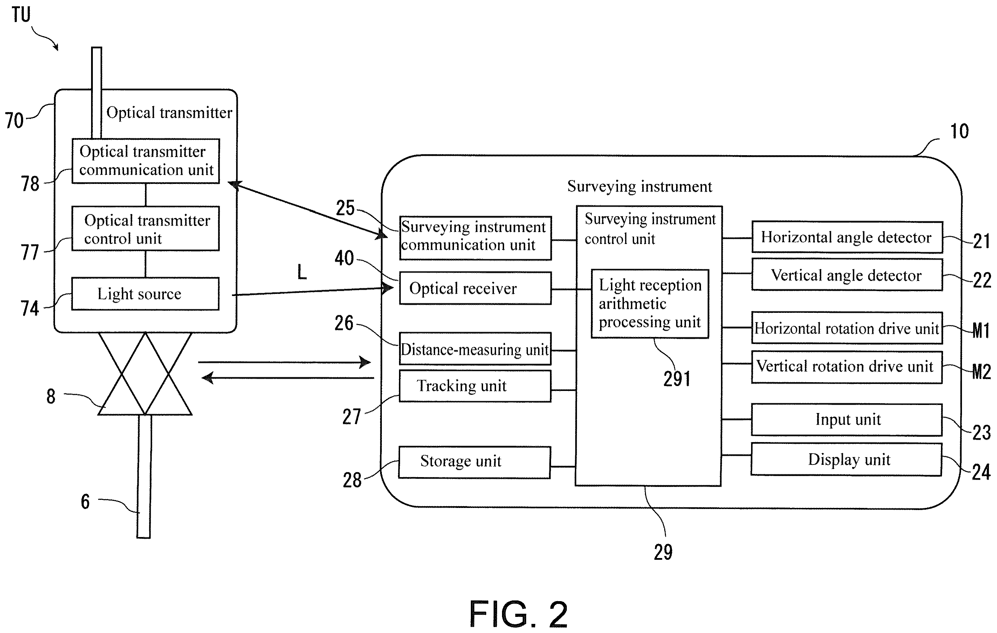

FIG. 2 is a block diagram of the surveying instrument 10 and the target unit TU. The surveying instrument 10 is a motor-driven total station and includes a horizontal angle detector 21, a vertical angle detector 22, a horizontal rotation drive unit M1, a vertical rotation drive unit M2, an input unit 23, a display unit 24, a communication unit 25, a distance-measuring unit 26, a tracking unit 27, a storage unit 28, and a surveying instrument control unit 29.

The horizontal angle detector 21 and the vertical angle detector 22 are encoders. The horizontal angle detector 21, located on the rotation axis of the bracket portion 2b, detects the horizontal angle of the bracket portion 2b. The vertical angle detector 22, located on the rotation axis of the telescope 2c, detects the vertical angle of the telescope 2c. The horizontal rotation drive unit M1 and the vertical rotation drive unit M2 are motors. The horizontal rotation drive unit M1 moves the bracket portion 2b, and the vertical rotation drive unit M2 moves the telescope 2c. The orientation of the telescope 2c is adjusted by the cooperation of these drive units.

The surveying instrument communication unit 25 enables communication with external networks. For example, it connects to the Internet using TCP/IP and transmits and receives information to and from the target unit TU. Other wireless communication method may also be used. Measurement results (distance/angle) obtained by the surveying instrument 10 may be transmitted to a processing terminal via the surveying instrument communication unit 25.

The distance-measuring unit 26 includes a light transmitting unit and a light receiving unit. It emits distance-measuring light, such as infrared pulse laser light, from the transmitting unit, receives the reflected light with the receiving unit, and measures the distance based on the time difference between the emitted and the reference light. In this embodiment, the surveying instrument 10 collimates the prism 8 of the target unit TU and measures the distance to the prism 8.

The tracking unit 27 includes a tracking light transmitting system that emits tracking light (e.g., infrared laser light with a different wavelength from the distance-measuring light) and a tracking light receiving system with an image sensor (e.g., CCD or CMOS). The tracking unit 27 can acquire both a landscape image including tracking light and one excluding it, and send both images to the surveying instrument control unit 29. The surveying instrument control unit 29 determines the center of the target image from the difference between the two images, detects the target position, and automatically tracks the target so that the telescope 2c always faces the target, keeping the distance between the target image center and the collimation axis center within a certain value.

The storage unit 28 includes ROM and RAM. The ROM stores programs for the surveying instrument control unit 29, and the RAM executes various controls. The storage unit 28 also includes RAM for storing various data transmitted from the light reception arithmetic processing unit 291 (described later).

The surveying instrument control unit 29 is a microcontroller with a CPU and controls, for example, information transmission/reception via the surveying instrument communication unit 25, driving of each rotation axis using the horizontal rotation drive unit M1 and the vertical rotation drive unit M2, distance measurement using the distance-measuring unit 26, angle measurement using the angle detectors 21 and 22, and auto-tracking using the tracking unit 27. The surveying instrument control unit 29 includes the light reception arithmetic processing unit 291. The light reception signal received by the optical receiver 40 is input to the light reception arithmetic processing unit 291 and stored in the storage unit 28 along with the horizontal angle detector 21 data at the time of acquisition. The arithmetic processing unit 291 processes the input signal to identify the target unit TU.

The input unit 23 and the display unit 24 are interfaces for the surveying instrument 10. The input unit 23 includes keys such as a power key, numeric key, and execution key, allowing the operator to input operations and information. In this embodiment, commands for surveying work and confirmation of results are input directly via the input unit 23. Alternatively, a separate controller may be provided, allowing remote operation of the instrument.

The optical receiver 40 is fixed to the bracket portion 2b, facing forward. It can receive light emitted from the target unit TU. The acquisition interval of the optical receiver 40 signal is shorter than the light emission cycle and sufficient to receive pulsed light of different cycles.

The optical receiver 40 includes a cylindrical lens, a rectangular light receiving sensor (not shown), and a vertical slit limiting the horizontal light receiving range. It can receive identification light L from the target unit TU regardless of height differences between the surveying instrument 10 and the target. Since the receiver is fixed to the bracket portion 2b, it can detect the horizontal direction of the target unit TU by receiving identification light L as the surveying instrument 10 rotates horizontally. The received signal is input to the arithmetic processing unit 291, processed, and used to identify the target unit TU.

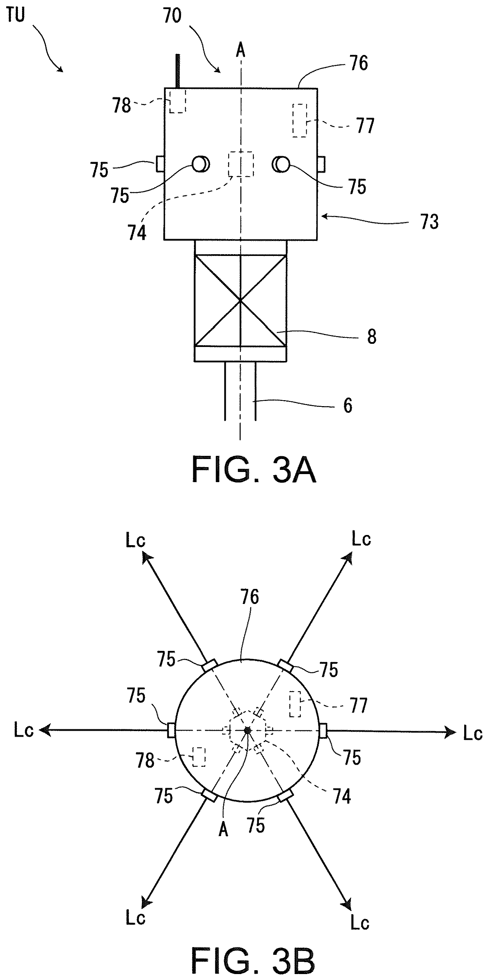

Next, the target unit TU will be described with reference to FIGS. 1, 3A and 3B. FIG. 3A is a side view, and FIG. 3B is a plan view of the target unit TU.

The target unit TU includes the pole 6 (target support member), the prism 8, and the optical transmitter 70. The prism 8 is supported at the upper end of the pole 6 so that the central axis A of the pole 6 passes through the optical center of the prism 8. The distance between the optical center of the prism 8 and the lower end of the pole 6 (mounting height) is known. The operator carries the prism 8 while holding the pole 6 vertically during movement. At the measurement point, the operator places the lower end of the pole 6 at the measurement point, keeps the pole 6 vertical, and uses the surveying instrument 10 to measure the distance and the angle to the prism 8.

The optical transmitter 70 includes a columnar housing 76, a light source 74, an optical transmitter control unit 77, and a communication unit 78. The transmitter 70 is attached to the upper end of the prism 8 so that the housing's central axis coincides with the pole's central axis A.

The light source 74, such as infrared LED, emits infrared light with a wavelength different from both the distance-measuring and tracking lights, serving as identification light L. The light source 74 is mounted near the center inside the housing 76 to emit identification light L circumferentially around the pole's central axis A. The housing's outer surface has multiple light transmission ports 75 at even intervals around the circumference on a plane orthogonal to the pole's axis A. In the illustrated example, there are six ports, but this is not limiting. As shown in FIG. 3B, identification light Lc is preferably emitted radially in all directions around the axis A. This eliminates the need for the operator to direct the ports toward the instrument, simplifying operation. However, the emission direction may be limited to part of the circumference or a single direction, in which case the operator can rotate the pole 6 to direct the light toward the surveying instrument 10. The transmitter 70 may be located at the upper or lower end of the prism 8. Alternatively, instead of a single light source inside the housing 76, an infrared LED may be provided at each port 75.

The optical transmitter communication unit 78 is the interface for the optical transmitter 70, enabling communication with the surveying instrument 10. Command signals from the surveying instrument 10 are input via this unit 78.

The optical transmitter control unit 77, such as a microcontroller with a CPU and memory, controls the activation and deactivation of the light source 74 in response to signals from the surveying instrument 10. The optical transmitter control unit 77 causes the light source 74 to blink at the set cycle T. The blinking cycle is set by the surveying instrument 10 and input to the optical transmitter control unit 77 via the communication units 25 and 78. The emission cycle may be freely set or selected from preset cycles. In any case, each target unit TU is assigned a different emission cycle T, which is stored in the storage unit 28 by the surveying instrument control unit 29.

In this embodiment, the optical transmitter 70 controls the light source 74 in response to signals from the surveying instrument 10, which is advantageous for power saving. However, this is not essential, the optical transmitter 70 may always blink at a predetermined cycle during measurement. In this case, the optical transmitter communication unit 78 is unnecessary, and the optical transmitter 70 may be manually turned on/off. A push switch (not shown) may be provided as an input unit, allowing the operator to set the lighting commands for the light source 74 and the instrument 10 from the target unit TU side.

The surveying instrument 10 can identify a specific target unit TU among multiple target units TU at a work site.

In this embodiment, the light sources 74 of the three target units TU1 to TU3 emit light at different cycles T1 to T3. The optical transmitter 70 emits pulsed identification light L at each cycle T. The identification light L is emitted circumferentially, received by the optical receiver 40, and transmitted to the light reception arithmetic processing unit 291. This embodiment eliminates the need for synchronization between the operations of the light reception arithmetic processing unit 291 and the optical transmitter control unit 77 of the target unit TU to adjust the emission timing to the reception timing. The identification light L is detected and identified by storing the reception signal in the storage unit 28 and processing it, for example, by accumulating the signal for each cycle T of the designated target unit TU. The optical receiver 40 is capable of receiving and identifying pulsed light of different cycles without issue.

FIG. 4 shows the timing (light reception cycle TA) of the optical receiver 40 and the emission of identification lights L1 to L3 from the optical transmitters 70 of the target units TU1 to TU3. The horizontal axis represents elapsed time.

The optical transmitters 70 of the target units TU1 to TU3 emit pulsed light at different cycles T1 to T3, respectively. The reception signal from the optical receiver 40 is continuously input as data to the light reception arithmetic processing unit 291 and stored in the storage unit 28. The stored data is divided for each set light reception cycle TA, and sequentially stored in time series.

By setting the light reception cycle TA to match the light emission cycle T of the identification light L of the desired target unit TU, the system can identify the target unit TU based on the identification light L. For example, to identify the first target unit TU1 among the three target units TU1 to TU3, the reception cycle of the optical receiver 40 is set to T1. Since the identification lights L1 to L3 are emitted at different cycles, even if all are emitted simultaneously at a certain time, the cycles are shifted.

Next, the method for identifying the first target unit TU1 will be described with reference to the relationship between the emission cycles of the identification lights L1 to L3 and the reception cycle of the optical receiver 40, as shown in FIG. 4.

When the selection signal input to the input unit 23 selects the first target unit TU1, the surveying instrument control unit 29 sets the reception cycle of the optical receiver 40 to the light reception cycle TA, equal to the light emission cycle T1 of the first target unit TU1. Thus, for the second target unit TU2 and the third target unit TU3, the light emission cycles T2 and T3 differ from the light reception cycle TA.

Since the identification light L1 of the first target unit TU1 has matching emission and reception cycles, subsequent emissions overlap the first emission. For the identification lights L2 and L3 of the second target unit TU2 and the third target unit TU3, the first emission is received, but subsequent emissions do not overlap the first due to the cycle difference. Each of the identification lights L2 and L3 overlaps the first emission only when the elapsed emission time is a multiple of the elapsed reception time.

The surveying instrument control unit 29 stores the identification light L1 received by the optical receiver 40 in the storage unit 28 as light reception data. When the next light reception data is received, the light reception arithmetic processing unit 291 accumulates the new data with the previously stored data. Each time new light reception data is received, the light reception arithmetic processing unit 291 stores it in the storage unit 28 in time series and sequentially accumulates it with the previously accumulated data. Through this accumulation process, only the signal of identification light L1 is amplified, making it easy to distinguish the identification light L1 from the identification lights L2 and L3. The light emission cycles T1, T2, and T3 are set to be asynchronous for at least five cycles each. As a result, it has been experimentally confirmed that the identification light L1, L2, and L3 can be reliably distinguished even with a small number of accumulations. Note that it is sufficient for the emission and reception cycles of the identification light to deviate slightly during the accumulation period. This enables identification of a target without complete synchronization between the emission and reception cycles.

To identify the second target unit TU2, the light reception cycle TA may be set equal to the emission cycle T2 of the second target TU2. Similarly, to identify the third target unit TU3, the light reception cycle TA may be set equal to the emission cycle T3 of the third target TU3.

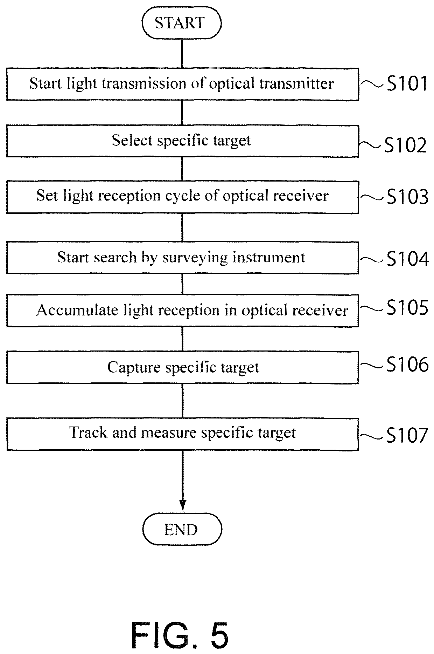

Next, the process of locking onto and surveying a specific target unit TU, for example the first target unit TU1, from among multiple target units TU, will be described with reference to the flowchart in FIG. 5.

First, in step S101, each optical transmitter 70 in the target units TU1 to TU3 causes its light source 74 to emit light at the light emission cycles T1 to T3, thereby starting transmission of identification lights L1 to L3. When the optical receiver 40 receives these identification lights, the light emission cycles T1 to T3 are stored in the storage unit 28. Alternatively, the emission cycles T1 to T3 may be input from the input unit 23 of the surveying instrument 10. The target units TU1 to TU3, which transmit light at cycles T1 to T3, are plased at predetermined positions in the surveying site.

Next, in step S102, the specific target unit TU1 is selected. The target unit TU1 may be selected via the input unit 23 of the surveying instrument 10, or by an operator holding the target unit TU1 and transmitting a selection signal to the surveying instrument communication unit 25 via a controller (not shown) or the optical transmitter communication unit 78 of the optical transmitter 70.

In step S103, the optical receiver 40 starts its light receiving operation. Here, the light reception cycle TA is set to the emission cycle T1 of identification light L1.

In step S104, the surveying instrument 10 begins searching by driving the horizontal rotation drive unit M1 to rotate the bracket portion 2b horizontally about the horizontal rotation axis H.

In step S105, the identification light L1 received by the optical receiver 40 is continuously input as light reception data to the light reception arithmetic processing unit 291, processed as described above, and accumulated. As a result, the first target unit TU1 is identified as the selected target unit.

In step S106, to align the optical axis of the telescope 2c with the prism 8 of the first target unit TU1, the surveying instrument 10 drives the vertical rotation drive unit M2 to move the telescope 2c up and down, applies tracking light from the tracking unit 27, and captures the prism 8 based on the reflected light.

In step S107, and the measurement optical axis is aligned and locked with the prism 8 of the first target unit TU1, allowing measurement of distance and angle.

Note that the present disclosure is not limited to the above embodiment. For example, the arithmetic processing may be averaging instead of accumulation, as long as the emission cycle of the selected target unit TU and the reception cycle of the surveying instrument 10 are set to be the same and the light reception arithmetic processing unit 291 can reliably identify signals of the same cycle. Additionally, the above embodiment may be modified based on the knowledge of those skilled in the art, and such modifications are also included within the scope of the present disclosure.

### Reference Signs List

- 1: Survey system
- 8: Prism
- 10: Surveying instrument
- 23: Input unit
- 25: Surveying instrument communication unit
- 26: Distance-measuring unit
- 27: Tracking unit
- 28: Storage unit
- 29: Surveying instrument control unit
- 291: Light reception arithmetic processing unit
- 40: Optical receiver
- 70: Optical transmitter
- 74: Light source
- 77: Optical transmitter control unit
- 78: Optical transmitter communication unit
- TU: Target unit
- L: Identification light

## Claims

1. A target detection method in a survey system that detects and measures one target from a plurality of targets,
the survey system including a surveying instrument that measures a target selected based on a selection signal for selecting the one target,
the plurality of targets emitting identification light in different cycles,
the surveying instrument including
a light receiving unit that receives the identification light, an input unit to which the selection signal is input, a storage unit, and a control unit, the target detection method comprising:
setting, by the control unit, a cycle in which the light receiving unit receives light based on the selection signal, storing the identification light in the storage unit as light reception data every time the identification light is received, accumulating or averaging the light reception data stored in the storage unit through arithmetic processing, and detecting a target to be measured based on an arithmetic result.

2. The target detection method in the survey system according to claim 1, wherein
the selection signal is input through wireless communication.

3. The target detection method in the survey system according to claim 1, wherein
light emission cycles of the plurality of targets are asynchronized at least up to five cycles each.

4. The target detection method in the survey system according to any one of claims 1 to 3, wherein
each of the plurality of targets includes a prism, and
the surveying instrument emits tracking light for tracking the prism to a target to be measured detected by the control unit, and aligns a measurement optical axis with respect to the prism of the target to be measured based on reflected light of the tracking light.
